Europäisches Patentamt

European Patent Office

Office européen des brevets

(11) Publication number: **0 094 187**
A2

# (12) EUROPEAN PATENT APPLICATION

(21) Application number: 83302463.1

(22) Date of filing: 29.04.83

(51) Int. Cl.³: **B 60 R 1/06**

(30) Priority: 11.05.82 GB 8213548

(43) Date of publication of application: 16.11.83
Bulletin 83/46

(84) Designated Contracting States: DE FR GB NL

(71) Applicant: **BRITAX (GECO) S.A., 1 et 3 Route d'Héricy, F-77870 Vulaines s/ Seine (FR)**

(72) Inventor: **Desforges, Patrick Jean James, 65 rue du Docteur Siffre, F-77930 Perthes-en-Gatenais (FR)**

(74) Representative: **Hollinghurst, Antony, Britax Central Services 40 Granby Avenue, Garretts Green Birmingham, B33 0SJ (GB)**

(54) Exterior rear-view mirrors.

(57) A rear-view mirror assembly, e.g. for use by a motor on towing a trailer, comprises a base member adapted to be adjustably secured to a side panel (32) of the vehicle body without piercing such panel, an arm (12) mounting on a central zone of the base member (18) for pivotal movement about a substantially vertical axis under the effect of a predetermined force and a mirror head (10) mounted on the arm. The base member comprises a first limb (36) extending upwardly from the central zone and having a hooklike formation (38) for engaging with a horizontally extending, inwardly facing edge (40) of said side panel, and second and third arms (24 and 26) extending substantially horizontally from said central zone in opposite directions so as to abut the side panel (32). An elastic strap (42) extends downwardly from said central zone and has a hook (46) on its free end to engage under a bottom edge (48) of the panel (32).

ACTORUM AG

- 1 -

Exterior Rear-View Mirrors

This invention relates to exterior rear-view mirrors and has
particular application to the provision of an exterior mirror which can
be temporarily fitted to a motor car which is towing a trailer or
caravan.

It is well known that it is difficult to obtain a
satisfactory rear view from a motor car which is towing a trailer
or carvan. This is because the mirrors originally fitted to the towing
vehicle do not project laterally to a sufficient extent to clear the
towed vehicle. It is therefore necessary to provide additional mirrors
mounted on relatively long arms and with relatively large reflective
surfaces. The wind resistance of these mirrors exerts large forces
on the mountings and generate substantial vibrations with the result
that it is necessary to use a system of multiple attachment points.

One such system is disclosed in DE-A-2726446, comprising a
three-point attachment system employing a complex arrangement of folding
and sliding arms to enable the mirror to be folded back against the
vehicle body in the event of impact.

The present invention is concerned with the provision of a
rear-view mirror for use when towing a trailer or caravan which can be
folded back against the body of the vehicle in the event of impact but
which is not subject to the foregoing complexities.

According to the invention, in a rear-view mirror assembly
comprising a base member adapted to be secured to a side panel of a
vehicle body without piercing such panel, an arm mounted on a
central zone of the base member for pivotal movement about a
substantially vertical axis under the effect of a predetermined force and a mirror head mounted on the arm, the base member comprises a
first limb extending upwardly from the central zone and having a
hook-like formation for engaging with a horizontally extending, inwardly
facing edge of said side panel and second and third arms extending
substantially horizontally from said central zone in opposite
directions so as to abut said side panel, with an elastic strap
extending downwardly from said central zone and having a hook on its
free end to engage under a bottom edge of the panel.

Preferably, a pair of elastic straps are provided, each having
its own hook so as to engage under such bottom edge at spaced locations.

The pivotally mounted arm may be connected to the base member
by a mounting block having a part-cylindrical recess for receiving the
arm and clamping means for securing the mounting block to the central
zone of the base member with the boundaries of the recess abutting
such central zone.  Preferably, the clamping means is adapted to secure
the block to either of two surfaces of the central zone, such surfaces
being inclined at an angle to one another so as to provide two
alternative mounting orientations for the arm relative to the base.  This
enables the mirror assembly to be mounted on a wide variety of types
of motor car with the pivot axis of the arm substantially vertical.

In order to secure the arm at a desired orientation about
its pivot axis relative to the base member, a resilient bush is preferably
secured to the end of the arm which is received in the recess.  When
a force is supplied to the arm exceeding the aforementioned predetermined
force, the bush slips relative to the recess, visual index marks on the
bush and either the mounting block or the base member being provided to
assist in the restoration of the arm  to its original position.  When
the orientation of the arm is to be adjusted, the connection between
the bush and the arm is slackened to enable the arm to pivot relative
to the bush while leaving the index marks in alignment with one another.

An embodiment of the invention will now be described by way
of example, with reference to the accompanying drawings in which;

Figure 1 is a perspective view showing a mirror assembly in
accordance with the invention, fitted to a motor car,

Figure 2 is a cross-sectional view of the base member and
clamping means of the mirror assembly shown in Figure 1,

Figure 3 is a cross-sectional view similar to Figure 2 showing
the clamping means attached to the base member at an alternative location.

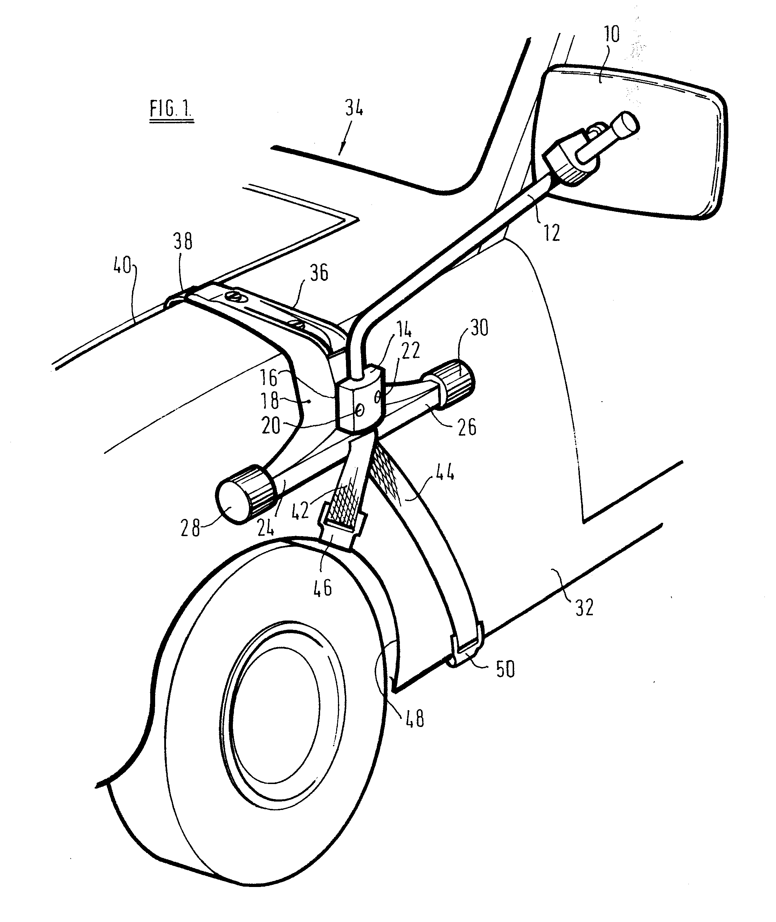

Referring first to Figure 1, a rear-view mirror assembly, for use when towing a caravan, comprises a mirror head 10 secured to an arm 12 in a conventional manner. The inboard end of the arm 12 is received in a part-cylindrical recess in a block 14 which is secured to one surface 16 of a base member 18 by two clamping screws 20 and 22.

The base member 18 is generally T-shaped, having two horizontally extending side limbs 24 and 26 carrying respective resilient buffers 28 and 30 on their free ends which abut against the front wing 32 of a motor car 34 without damaging the paint. A third limb 36 of the base member forming the stem of the T-shape is cranked at an intermediate point along its length and has a hook-like formation 38 on its free end which engages with the edge 40 of the bonnet opening.

Two straps 42 and 44, formed as a single length of elastic material, are attached to the base member 16 on the junction between the three limbs 24, 26 and 36. The strap 42 has a hook 46 on its free end which engages with the edge of the wheel arch 48 formed in the wing 32 while the strap 44 has a hook 50 which engages with the bottom edge of the wing 32 behind the wheel arch.

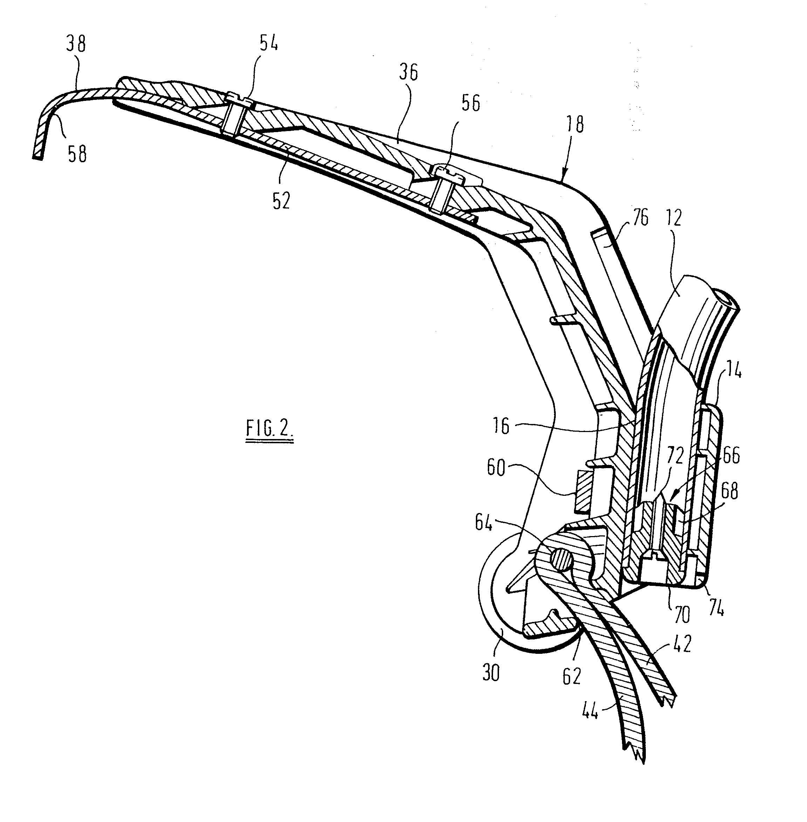

Referring now to Figure 2, the base member 16 consists of a plastic moulding. The hook-like formation 38 is formed on the free end of a metal strap 52 which is secured to the limb 34 by screws 54 and 56. The projecting end of the strip 52 is covered by a plastic or rubber sleeve 58 so as to avoid damaging the vehicle paint. The screws 20 and 22, which support the clamping block 14, engage in tapped holes in a metal block 60 which is located in a recess within the base member 16. The elastic material forming the straps 42 and 44 has a loop projecting through a slot 62 into the recess in the base member 18, a rod 64 being received in the loop to prevent withdrawal thereof through the slot 62.

The pivoting arm 12 which supports the mirror head 10 is formed from metal tube. A resilient rubber plug 66 has a stem 68, which state is a loose fit in the interior of the tube forming the arm 12, and a head 70 of slighter larger diameter than the external diameter of the arm 12 so as to be an interferance fit in the cylindrical recess in the mounting block 14 thereby to inhibit relative angular movement except when a predetermined torque is exceeded.   A screw 72 extends axially through the stem 68 and,
when tightened, compresses the latter axially, causing its diameter
to expand so as to be clamped firmly against the interior of the
arm 12.   A slot 74 in the bottom of the mounting block 14 enables
an index mark (not shown) on the head 70 to be viewed.

In use, the base member 18 is secured to the vehicle by
hooking the hook 36 over the edge 40 of the bonnet opening and then
attaching the hooks 46 and 50 to the bottom edge of the wing 32, the
index mark on the head 70 having previously been aligned with the
slot 62.   Next the screw 72 is slackened and the arm 12 set at the
required orientation.   The screw 72 is then retightened.   The
assembly is now ready for use.

In the event of impact on the mirror head 10 or the arm 12,
the latter may be folded backwards or forwards against the side of
the vehicle, the head 70 of the plug 66 slipping in the recess in
the block 14.   Subsequently, a similar but opposite force can be
applied manually to the arm 12 to realign the index mark on the plug
66 with the slot 74, thereby restoring the mirror head 10 to its
original position.

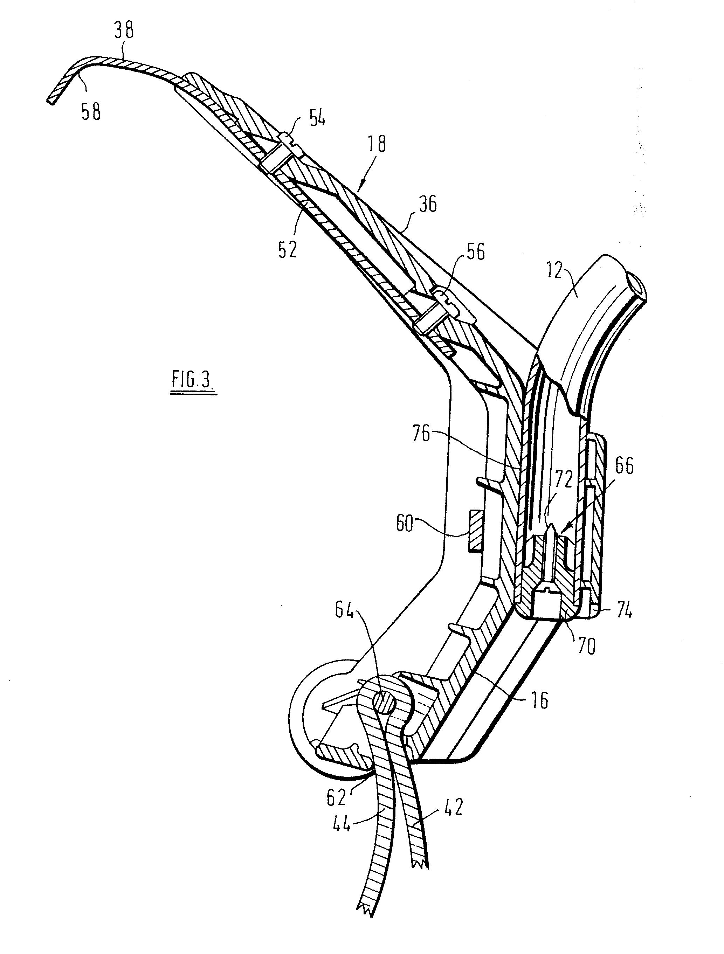

If the distance between the edge 40 of the bonnet opening
and the vertical part of the wing 32 is substantially less than that
illustrated in Figure 1, the pivot axis of the arm 12 would tend to
slope  outwardly from the vertical.   In use on such vehicles the
clamping block 14 may be secured to a surface 76 of the base member
16 which is inclined to the surface 16, as illustrated in Figure 3.
Preferably, the base member 16 is mounted with blind holes for the
screws 18 and 20 in both surfaces 16 and 76.   The assembly is then
supplied to the customer in unassembled form and the customer
merely has to knock out the ends of the appropriate pair of blind
holes and use the screws 18 and 20 to secure the mounting block 14
in the required position.

To cater for circumstances when the distance between the
edge 40 of the bonnet opening and the vertical part of the wing 32
is substantially greater than that illustrated in Figure 1, the
metal strip 52 may be provided with alternative holes (not shown)
for the screws 54 and 56 whereby the strip 52 may be secured to the
limb 36 with more of its length projecting from the end thereof.

0094187

The mirror assembly can be mounted on a motor car in different positions to that illustrated in Figure 1. For example, the base member 18 may be located centrally over the wheel arm 48 and the strap 44 shortened to permit both hooks 46 and 50 to engage with the edge of the wheel arch 48. On cars where the part of the front door below the waist of the vehicle extends in front of the line of the windscreen pillar, the base member 18 may be mounted on the door with the hook 38 engaging with the upper edge of this forwardly projecting part of the door.

-6-

0094187

CLAIMS

1. A rear-view mirror assembly comprising a base member (18) adapted to be secured to a side panel (32) of a vehicle body without piercing such panel, an arm (12) mounted on the base member (18) for pivotal movement about a substantially vertical axis under the effect of a predetermined force and a mirror head (10) mounted on the arm (12), characterised in that the base member (18) comprises a central zone (16) on which the arm (12) is mounted, a first limb (36) extending upwardly from the central zone (16) and having a hook-like formation (38) for engaging with a horizontally extending, inwardly facing edge (40) of said side panel (32) and second and third arms (24 and 26) extending substantially horizontally from said central zone (16) in opposite directions so as to abut said side panel (32), with an elastic strap (42) extending downwardly from said central zone (16) and having ahook (46) on its free end to engage under a bottom edge (48) of the panel (32).

2. A mirror according to claim 1, characterised in that two elastic straps (42 and 44) are attached to the central zone (16), each strap having its own hook (46, 50) arranged to engage under such bottom edge at spaced locations.

3. A mirror according to claim 1 or 2, characterised in that the pivotally mounted arm (12) is connected to the base member (18) by a mounting block (14) having a part-cylindrical recess for receiving the arm (12) and clamping means (20, 22) for securing the mounting block to the central zone (16) of the base member with the boundaries of the recess abutting such central zone.

4. A mirror according to claim 3, characterised in that the block (14) to either of two surfaces 16, 76) of the central zone (16), such surfaces being inclined at an angle to one another so as to provide two alternative mounting orientations for the arm (12) relative to the base member (18).

5. A mirror according to claim 3 or 4, characterised in that a resilient bush (66) is releasably secured to the end of the arm (12) and is in frictional engagement with the recess.

6. A mirror according to claim 3, characterised by visual index marks (74) on the bush (66) and either the mounting block (14) or the base member (18) to assist in the restoration of the arm (12) to a predetermined position.

FIG. 1.

FIG. 2.

FIG.3.